# EUROPEAN PATENT SPECIFICATION

(11) **EP 2 627 163 B1**
(45) Date of publication and mention of the grant of the patent: **06.04.2016**
(21) Application number: 11724793.2
(22) Date of filing: 12.05.2011
(51) Int. Cl.: A01G 1/04

(54) **LOCALIZED AERATION EQUIPMENT FOR GROWING CHAMPIGNONS AND OTHER CULTIVATED MUSHROOMS AND THE METHOD OF ITS USAGE**
LOKALISIERTE BELÜFTUNGSVORRICHTUNG ZUR ZÜCHTUNG VON CHAMPIGNONS UND ANDEREN KULTIVIERTEN PILZEN SOWIE VERFAHREN ZU IHRER VERWENDUNG
ÉQUIPEMENT D'AÉRATION LOCALISÉE POUR LA CULTURE DE CHAMPIGNONS COMESTIBLES ET D'AUTRES CHAMPIGNONS CULTIVÉS ET SON PROCÉDÉ D'UTILISATION

(30) Priority: 11.10.2010 LT 2010083
(43) Date of publication of application: 21.08.2013
(73) Proprietor: UAB "EKO Invest", 78287 Siauliai (LT)
(72) Inventor: JUSCIUS, Kestutis, 81411 Siauliu r. (LT)
(74) Representative: Zaboliene, Reda
(86) International application number: PCT/IB2011/052086
(87) International publication number: WO 2012/049574

(56) References cited:
- WO-A1-2010/095932
- AT-B- 413 172
- DE-U1- 20 309 456
- SU-A1- 459 192
- US-A- 4 273 495
- US-A- 6 018 906
- US-B1- 6 367 191

## Description

This invention pertains to a field of growing champignons and other cultivated mushrooms.

It is considered that the roots of the champignons growing reach the year 1700, however, the purposeful and deliberate growing of champignons has started in the 19^{th} century in France. Despite the fact that the methods of growing champignons known at that time were not very productive, there was a lack of the material homogeneity in all of the stages of champignon growing, the methods were dangerous because of the bacteria, spores and diseases, as well as were unclean and had a strong unpleasant smell emitted by the compost (champignons growing is a certain way of waste recovery, where the basis of the material for champignons growing is made of horse and chicken manure mixed with straws). Nevertheless, this was the very start of growing champignons that induced all further works on developing and improving the process of the champignons growing. The primary system for growing champignons formed in China, but after some time this activity spread to Europe and America. In the end of the 19^{th} century, problems of sterilization of the champignons growing were analysed; in the beginning of the 20^{th} century the concept of shelving was created, which became the basis and the standard in the field of growing champignons in America and Europe, while in the year 1970, a technology of fermentation rooms (bunkers) or tunnels was created, which enabled to distinguish the stages of the compost pasteurization and mycelium incubation from the mushroom growing, i.e. pasteurization and incubation of the mushroom substratum was transferred to the separate specially equipped premises. From the year 1970, many patents have appeared, which analyse and solve problems occurring in different stages of the champignons growing, however, these were more quantitative improvements of the champignons growing, due to which the yield of mushrooms increased from 22 to 40 kg/m², while the manufacturing process basically remained the same, because the same equipment, i.e. its productivity and efficiency, was improved. It is necessary to emphasize that there are various problems related to the champignons growing: complicated biochemical reactions and uncertainties, because the process of the champignons growing depends on many known and unknown factors. The laboratory findings show only the main qualitative indicators of the substratum; however, usually the findings that correspond to the norms do not ensure that the expected yield will be gained on the prepared substratum. The manufacturer / grower has to take into consideration the colour, smell, decay rate and many other measurable and hardly measurable parameters, the knowledge of which is collected / formed over a long time. For this reason, more and more manufacturers of the mushroom compost and growers of the final product all over the world specialize in one certain activity they know best.

Normally, the champignons growing comprises of 5 stages. In every stage of the champignons growing different problems occur, therefore already existing patents describe and solve problems of various types. Many patents are related to invention of the additional elements / supplements, their manufacturing and method of usage with the aim to enrich the substratum medium with various materials, allowing increasing the amount of the collected mushroom yield.

There is a known US patent No. US 3,942,969, published on 9th of March of 1976. This patent analyses the nutrient medium, where the mycelium is placed. This patent studies the materials nurturing the mycelium and which are artificially enriched with denaturalized proteins. The mentioned denaturalized proteins are mixed with the substratum before or after planting the mycelium. Vegetable or fish oils are also added for the stronger effect. This invention is intended only for improving / enriching the nutrient medium with the nutrients. However, it involves only a narrow part of the process of the champignons growing and does not analyse the stages / phases of nutrient formation, pasteurization and conditioning (preparation).

The other known US patent No. US 4,990,173, published on February 5th of 1991. This patent uses hydrophilic carbohydrate materials, which from one side nurture the mycelium network and from the other side restrict the reproduction of the microorganisms and their access to the mycelium networks. This patent analyses the formation process of the nutrient of the champignons in respect of the energy accumulation and the microorganisms, however, it does not include any of the problems related to the formation of the substratum, aeration and temperature control.

There is a known Korean patent No. KR 2007 0078545, published on August 1st of 2007. This patent describes the aeration system of the compost, comprising of ventilators that supply air flow to the room and ventilate the room, where the preparation of the substratum is in the process. During the process of aeration, the oxygen of the compost is controlled in the outer layers of the compost, however, this involves only the outer layers, because the problem of temperature and the amount of oxygen control still stays in the inner layers of the compost.

EP 0 434 159, published on June 26th of 1991 describes a so-called system of tunnels / bunkers, which allows distinguishing the stages of compost pasteurization and mycelium incubation from the mushroom growing. However, a few problems exist in these types of tunnels. One of the problems is very high electric power consumption for ventilation, because the layer of the prepared material is very thick (up to 4 metres). The other problem is not equal oxygen distribution in such tunnels. This happens due to a very big compost loading height and the formation of a very high-density material places in some places and the slots in the other places through which too much of air flows. Due to the mentioned locally formed places of too high or too low density, the material homogeneity in the whole mass of the substratum is not reached.

AT 413 172 B discloses a mushroom growing system with a bottom integrated into a shelving construction for the placement of material to be processed and at least two opposing side walls, wherein one side wall has an inlet channel for providing an air flow and the other side wall has a discharge channel for the air flow. The bottom can be formed by a grate to avoid water locking by excessive watering of the material to be processed.

US 6, 018,906 relates to a mushroom bed structure including an open grate as a center section of the floor with horizontal sides and upstanding sides made of insulative type material such as wood. The openness of the grating in combination with the insulated sides serves to equalize the temperature.

It is necessary to emphasize that the technologies of the champignon growing have a few very important problems, which have not been solved in the world till these days: temperature and / or aeration control in all / various stages / phases of the champignons growing as well as high electric power consumption for the preparation of the substratum medium and maintaining the current temperature in the room. On one hand, since the natural biochemical reactions are faced, during which a lot of heat energy is emitted, an equal excessive heat abstraction is one of very important aspects. On the other hand, anaerobic and aerobic processes are naturally happening in the material to be processed and in the technology of the champignon growing only aerobic processes are required, while anaerobic ones are especially undesirable.

For the aerobic processes to be fluent and anaerobic processes not to happen, an efficient amount of oxygen is to be ensured in the prepared material not only generally (i.e. externally), but also locally, i.e. oxygen distribution is very important in all prepared material. Because in the places, where the lack of oxygen exists, anaerobic processes emerge immediately, inducing decay and rapid reproduction of unwanted microorganisms.

It is an object of the invention to provide a mushroom growing system and a method for growing mushroom which solves the previously mentioned problems of aeration, temperature and material homogeneity control and which as well significantly reduces electric power consumption. This object is solved by the features of claims 1 and 4.

When using this method of manufacturing / growing of champignons, the time needed for growing shortens, the production amount increases and therefore decreases the prime cost of the final product (mushrooms). The problem of harmful microorganisms also decreases, whereas an additional / specialized usage of this method allows saving on electric power. When using this new method of manufacturing, the manufacturing of the mushroom substratum becomes more standardized, less uncontrolled processes are left, the technology of substratum manufacturing becomes available to every mushroom grower. This technology is especially important in respect of ecology - there is a significant decrease in electric power needed for growing one kilogram of mushrooms and it is possible to refuse from using the fossil fuel, because it is possible to use the heat emitted during the preparation process of the substratum. However, currently working plants manufacturing the substratum for the champignon growing simply emit the excess heat into the atmosphere, and, at the same time, the growers burn fuel for maintaining the temperature in the premises, where the mushrooms are grown.

The essential feature of this invention is that it is refused to use the previously mentioned tunnel technology in the process of the champignon growing and is returned to the shelving system, however, it is proposed to grow mushrooms in a completely different way than it used to be done before, i.e. to integrate very effective localized aeration systems, which could very effectively locally and equally aerate the material to be processed (compost / substratum) on the shelving construction. Moreover, together with the air this integrated aeration system abstracts the excess heat, and, when using the system of this type, it is possible to qualitatively / accurately control the temperature. Furthermore, there is a possibility to precisely control the temperature in the room not only externally (as it was done in the prior art), but internally - on the shelving construction and / or their parts.

This localized aeration and control equipment / system integrated into the shelving construction, as well as the method of its usage ensure:
- completely equal oxygen supply to the nutrient medium (on the shelving construction) (locally and generally);
- very qualitative / precise temperature control not only on the whole shelving construction, but also in every part of the shelving contruction (currently, the temperature control of the compost in the growing chambers is implemented only externally - by observing and changing the parameters of the environment air);
- extremely high homogeneity control of the nutrient medium (when the qualitative air supply and qualitative / precise temperature control are ensured, the compost quality and homogeneity also significantly increase);
- significantly lower electric power consumption during the preparation of the nutrient medium, especially in the pasteurization and mycelium incubation stages;suspension of the anaerobic processes to the minimum in the nutrient material;
- ∼10-30% shorter overall growing cycle of the champignons;
- ∼10-30% bigger yield from the same area;
- significant reduction of the prime cost of the champignons growing (no need to transport the substratum from the distant plants of the prepared substratum, the usage of the secondary heat emitted by the compost allows reaching 20-40% lower prime cost);

Moreover, this new method of growing allows protecting the nature and its recourses: it significantly reduces the usage of the fossil fuel. The usage of this method allows not only to save on electric power, but also to make biofuel from the mushroom substratum after the yield picking. This substratum can be used for bio-power plants and boiler-rooms. When using this method of manufacturing, the production of mushroom substratum is more standardized, there are less uncontrolled processes left; the technology of the substratum manufacturing becomes available for every mushroom grower.
Fig. 1 shows an overall schematic view of the mushroom growing system.
Fig. 2 presents an overall schematic view of one embodiment of the aeration system for localized aeration, where the localized aeration of the material to be processed is performed from the bottom to the top.
Fig. 3 shows a schematic view of another embodiment of the aeration system for localized aeration, where the localized aeration of the material to be processed is performed from the inside to the outside.

Presently, the process of the champignon growing consists of five phases / parts: preparation of the primary compost mass (phase I), compost pasteurization and formation of the prepared nutrient medium (phase II), mycelium germination, incubation (phase III), formation of the rudiments (phase IV) and mushroom growing (phase V).

The primary compost mass is prepared during the phase I. The basis of the mass is made of the materials of an organic origin, for example, horse manure and / or chicken (bird) droppings mixed with straws and water. Additionally, the mineral calcium additives are mixed. Other minerals of the above mentioned materials normally exist in sufficient amounts. Everything is mixed and this mixed mass is placed into the compost piles having a form of a prism or into special premises - bunkers (tunnels), where the compost is made by naturally supplying oxygen to the piles having a form of a prism or by using the forced method in the tunnels / bunkers.

The compost is pasteurized in the beginning of the phase II. High temperature of 56-60°C degrees together with the ammonia emitted during the process of compost destroys the pathogenic mushrooms and microorganisms, however, useful microorganisms are preserved during this process. Useful microorganisms preserved after pasteurization (thermophilic fungi are the most useful) reproduce in the optimal temperature of 45-50°C degrees, and they process the materials of the compost and form the optimal medium for the further reproduction of the champignons mycelium.

During the phase III, the mycelium is germinated and incubated into the prepared nutrient medium, while during the phase IV, the rudiments are formed and during the phase V, the final product (champignons) are grown and the production is picked.

Up to the year ∼1970, the mentioned phase II was implemented on the so-called growing shelves (containers, boxes), which were placed into a room ventilated with the outside air. However, the external ventilation of this type was not sufficient and the nutrient medium after the phase II was not of the best quality in respect of the material homogeneity and cleanliness (microorganisms). Since the processes of the champignons growing are related to many various problems, complicated biochemical reactions and uncertainties, more and more manufacturers of the mushroom substratum and the manufacturers of the final product specialize in one particular activity that they know best, i.e. after the year 1970, when the new tunnel systems were presented, works related to the champignons growing were redistributed: phases I and II were implemented in separate rooms (later the phase III - incubation phase - was moved to the tunnels) and phases III, IV and V - in other owned premises, the distance between two of those could reach thousands of kilometres. However, the tunnel systems solved only some of the problems. Furthermore, during passed ∼40 years, many improvements were made, intended for improving the parameters of the separate growing phases and the process effectiveness, however, many patents are not intended for improving the whole process of champignon growing as an integrated system.

The essential feature of this invention is that the whole system of the champignons growing (all five phases) is analysed as an integral system, where all growing phases are implemented in one place, i.e. it is refused to use the mentioned tunnel technology and returned to the shelving construction, however, it is proposed to grow mushrooms on the shelves (in the boxes, containers, packages, package systems or containers of other type) with integrated / connected effective localized aeration and temperature control system, allowing to ventilate the formed mass from the inside. The essence of the new champignon growing method is to ensure an effective localized aeration, qualitative localized temperature control as well as to create and maintain the homogeneity of the nutrient medium. This invention can also be used for every separate manufacturing phase: in a certain phase, according to the typical processes and technologies, it is necessary to choose and arrange the equipment and its technical parameters.

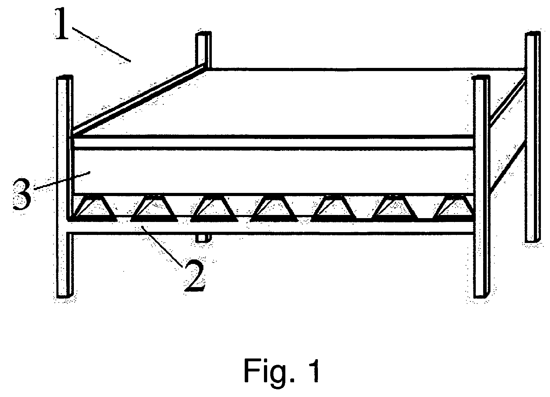

Fig. 1 shows an overall schematic view of the mushroom growing system for growing champignons and other cultivated mushrooms. The mushroom growing system 1 consists of: a shelving construction 2, where the material 3 to be processed is placed, and an aeration system 4 for localized aeration with a ventilated bottom 5. This bottom 5 can also be called ventilating, because it is a part of the circuit, ensuring the localized aeration of the mentioned material 3.

The material 3 to be processed can be compost, substratum or other material used in the process of the champignons growing / manufacturing. Depending on the growing stage / phase, the material 3 to be processed is to be properly locally aerated (processed). To reach this aim, the shelving construction 2 can be used, ensuring the placement of the material 3 to be processed and the localized aeration. The basis of the shelving construction 2 is made of the ventilated bottom 5 of any form (flat, concave, convex, of a regular or not regular form and etc.). The aeration system 4 is integrated into the shelving construction 2, providing an opportunity to ensure an effective localized aeration and qualitative localized temperature control. The material 3 which should be properly processed / prepared (depending on the manufacturing phase) is filled on the ventilated bottom 5 of aeration system 4 to which the air is supplied or through which the air is extracted. The construction of the ventilated bottom 5 consists of the aeration elements 6, pipe system 7 and external air supply / extraction system, ensuring the air supply / extraction to / from the pipe system 7. The construction of the ventilated bottom 5 allows proportional and equal distribution of air, oxygen or gas of other consistence in the lower part and in the inside of the material 3 (compost / substratum). When using the aeration system in the extraction mode, it is possible to easily remove the emitted gas from the material 3 (compost / substratum) straight from the centres (places), where they form.

Aeration elements 6 connected with the ventilated bottom perform the direction of the distributed air flow to / from the material to be processed or to / from the separate parts of the material to be processed. When using the ventilated bottom 5, air flows are directed from the bottom to the top at the 90° angle or at other technologically implemented angle.

Depending on the growing method and the type of mushrooms, the extraction process can be implemented by using different methods; the essential aspect is that the air moves / is extracted from the room through the compost / substratum to the localized aeration system.

The amount of the supplied / extracted air depends on the need of the process and differs in various manufacturing phases. The basis of the aeration system 4 can be made of the aeration elements 6 of any type or form: the most important thing is that the purpose of them is not aeration of the room, but localized aeration of the mentioned shelving construction 2 or part of the shelving construction 2. The mentioned shelving construction 2 can be a box, container, package for the substratum medium or container of the other type, in which the ventilated bottom 5 could be installed and the required amount of material to be processed (substratum) could be placed.

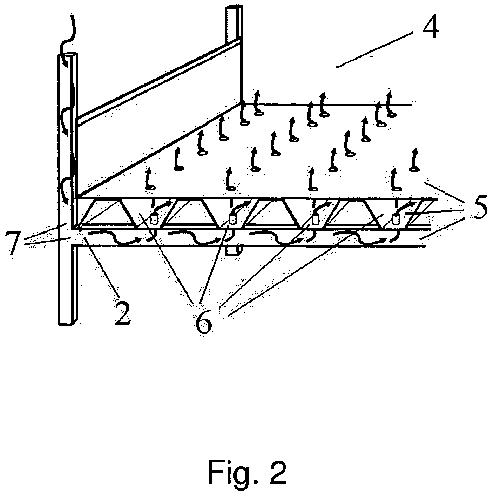

Fig. 2 shows a more detailed schematic view of the mushroom growing system 1 intended for growing champignons or other cultivated mushrooms, where one embodiment of the aeration system 4 is provided, when the aeration of the material 3 to be processed is implemented from the bottom to the top.

However, the aeration can be performed not only from the bottom to the top, but also in any other way depending on the technical capabilities and if is a sufficient ground for doing that, for example, from the inside to the outside or vice versa. The geometry of the aeration system 4 can be different, it is important for it to be effective, practical and safe.

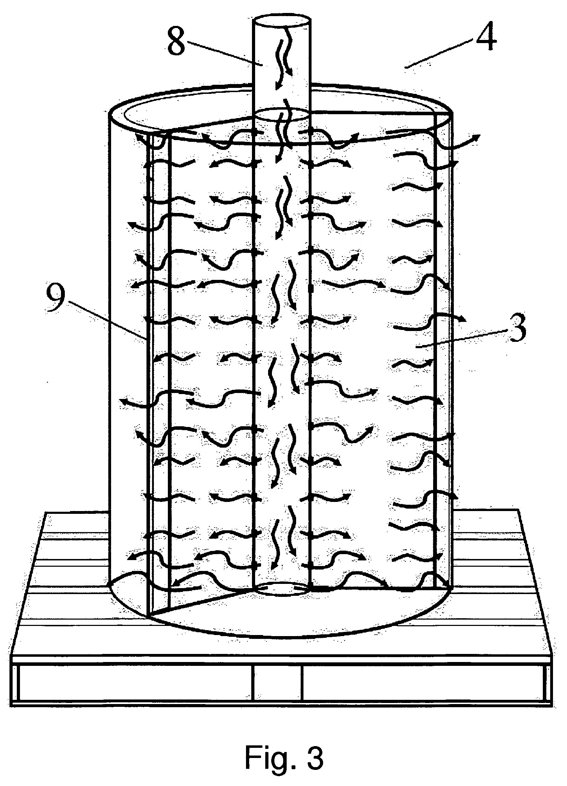

Fig. 3 shows another embodiment the aeration system 4, where the aeration of the material 3 to be processed is implemented not from the bottom to the top, but from the inside to the outside. In this case, the aeration element having a form of a pipe is mounted into the material to be processed 3 (formed mass of the substratum / compost), through which the supplied / extracted air, which gets inside the material 3 to be processed, comes from the inside to the outside or vice versa. An aeration element 8 having a form of a pipe can be arranged in different ways, for example, vertically, horizontally or in the other way. The package of the substratum can be made of the air permeable mesh 9. Moreover, the mentioned package can be not air permeable, however, in this case, after packaging, the corresponding vents are formed intended for air extraction / intake from the package / to the package.

Under the same environmental conditions, by changing the amount of the supplied / extracted air and differently ventilating the shelves in the growing room, it is possible to anticipate or slow the manufacturing processes in the mushroom growing system. This provides an opportunity to get a more even yield in the room. In the more ventilated places of the shelf, the substratum temperature is lower, therefore on these shelves the mushrooms start growing later comparing to the shelves that are less ventilated and where the temperature remains higher. For this reason the grower will have a bigger amount of the grown production. This is especially important for the growers, who do not have a lot of rooms; however, normally it is important for all growers. The mentioned aeration also ensures a qualitative / precise temperature control. From one side, during aeration the heat can be locally abstracted together with the supplied / extracted and outgoing air. From the other side, depending on the need, the supplied / extracted air can be heated by the additional heating equipment or the same excess heat of the biochemical reactions, emitted in the first and the second phases of the champignons compost manufacturing.

The method for growing mushrooms with the above mentioned mushroom growing system 1 of the shelves (and other similar alternative analogues) with an integrated aeration system 4 for localized aeration strongly effects the whole process of the champignons or other cultivated mushrooms growing, starting with the primary stages of the compost processing and finishing with the final product growing.

During the phase I, when the primary compost mass is prepared, the mentioned aeration system 4 is essential, because only effective aeration of the compost stops the unwanted anaerobic processes and induces / promotes the aerobic processes, which are important during the whole process of the champignon growing, especially in the preparation, pasteurization and mycelium germination stages. By ensuring a constant air circulation, it is possible to reach a very even composting process in the compost mass during the phase I.

For this reason is it possible to stop using the currently used compost mixing procedure, which is applied with the aim to ensure a better homogeneity of the mixed material. Presently, to ensure an equal fermentation process, the compost is mixed / used 2-6 times during the phase I of the compost manufacturing. During the phase II, when the processes of the pasteurization and the nutrient medium formation are active, the role of the aeration system is to maintain the wanted / required medium temperature, which should be close to the optimal temperature, typical to the corresponding process. When using the method of the localized aeration during the champignons growing, it is possible to shorten the time of the phases I and II from 13-28 to 10-15 days. It is also possible to avoid the anaerobic processes, which ensure the preparation of clean and homogeneous nutrient medium from the very start of the manufacturing process.

Starting with the mycelium planting stage (phase III) and finishing with the final product growing (phase V), aeration and temperature control play important role as well, for example, during the mycelium planting (phase III) and formation of the rudiments (phase IV), a significant amount of heat is emitted, which is to be strictly controlled. When using the method of the localized aeration, this task is easily implemented and the cycle of the mushroom growing from mycelium incubation to yield picking (three growing stages) shortens from 6 to 5.5 weeks. The growing cycle shortens, because after putting the coating layer on the shelf, the mycelium has to naturalize in it and only after this it is possible to move to the fourth phase of the rudiments formation. Since the substratum is ventilated from the inside (i.e. locally), the heat is extracted through the coating layer and its temperature is 2-5°C higher comparing to the usage of the standard method of growing. For this reason the mycelium naturalizes faster in the coating layer. When using this invention, it is possible to place a bigger amount of compost, which provides a shelf with an additional activeness easily controlled by the aeration systems, influencing a faster formation of the rudiments and the rate of the production growing.

The usage of this localized aeration method allows to place 20-40% bigger amount of dry materials into the same unit of the growing area; therefore it is possible to collect 10-30% bigger yield from the same area. In the currently used technologies of the champignons growing, the increase of compost amount is restricted by the heat emitted by the compost during the mycelium growing: when increasing the compost amount, it is impossible to control the temperature in it; therefore, when increasing the compost amount, the mycelium is destroyed or weakened due to the heat, and usually the opposite (negative) result is reached.

Since the compost temperature is controlled by blowing / extracting the air from the inside and not by cooling with the air of the growing room externally, therefore the temperature of the air for maintaining the compost temperature can be higher. In many cases, it is possible to reach this without using the cooling machines, but by using the outside air, supplied to the mentioned shelves, depending on the blowing or extraction mode, from the bottom or from the top. For example, the same compost temperature of 25°C can be reached by the standard way of blowing the air of 12°C, which warms up to 17°C due to the compost, to the room, therefore the cooling effect is the difference of the temperature 25-17, or by supplying the air of 17°C, which is outlet from the compost warmed up to 23-25°C, directly to the compost via the aeration system. Analogically, when using the extraction mode, the air of 17°C is supplied to the room and extracted when its temperature reaches 23-25°C. When blowing the air from the outside to the compost, it is possible to use the outside air for the heat (present inside the compost) abstraction much more often and use less of expensive cold, generated for air cooling machines.

When using the aeration system in the extraction mode, the heat and gas emitted from the substratum are concentrically collected from their emission centres (places). The heat of the compost / substratum and the emitted gas hardly get into the air of the room, therefore the ventilation systems of lower capacity are enough for the ventilation of the room air. Moreover, in order to provide the optimal development conditions for the mushrooms, the required CO₂ gas concentration is to be maintained in the mushroom growing premises, the value of which, depending on the growing conditions, can differ. Normally, the average outside air CO₂ concentration is approximately 350 ppm, however, due to the biochemical reactions in the mushroom growing premises the concentration of these gas is always higher, therefore, when externally ventilating, every cubic metre of the fresh air decreases CO₂ concentration in the air of the room. In case the air is extracted via the aeration system, in this extracted air CO₂ concentration is always higher than in the room, because the bigger part of the gas does not get into the room and does not mix with the fresh air and is collected and removed via the aeration system. In this case, the smaller amounts of the prepared fresh air are needed for maintaining the same CO₂ level in the air of the growing room, as well as less energy is needed for preparing this air for a certain process / stage of the mushroom growing.

Moreover, the usage of the localized aeration method considerably reduces the prime cost of the champignons growing: it is not necessary to transport the substratum from the substratum factory to the mushroom growing place (the distance between the factories can sometimes reach thousands of kilometres); the raw material is usually obtained locally or manufactured by the person himself, by using all benefits provided by the localized aeration system, because the current price of the substratum makes 50% of the prime cost of the final product.

Comparing to the standard currently known system for the champignon growing, the usage of the localized aeration system and compost heat emitted due to the biochemical reactions, used for heating of the premises, allows reducing the prime cost of the final product (champignons) by 20-40%. By implementing the absorption cooling method it is possible to convert the excess heat into cold, which is necessary during the process of the mushroom growing.

This growing method is also very beneficial in the environmental aspect: there is a considerable decrease in the need for electric power required for growing one kilogram of mushrooms and it is possible to stop using the fossil fuel used for heating the premises. When using the localized aeration system, the substratum left after the mushroom growing can be dried, and the hot air used for the substratum drying is obtained from the residual heat emitted from the substratum during the manufacturing phases 1 and 2. The dried substratum can be used as biofuel for generating heat and electric power. All heat emitted during the manufacturing process is used in this way. The mushroom growing place becomes not only a business entity providing itself with the heat or cold (when the absorption cooling method is used), but also producing additional biofuel for other consumers of the heat. In the contemporary systems of the mushroom growing, the processes of the substratum manufacturing and mushroom growing are distinguished geographically, therefore the heat transfer from the substratum factory to the growing place is impossible. Moreover, when drying the substratum externally with the air of the premises and not blowing / extracting the hot air from the inside via the aeration system, the drying process would take 2-3 times longer, more energy would be used and it would be uneconomic.

When using this invention, the manufacturing of the mushroom substratum is more standardized, there are less uncontrolled processes left, the technology of the substratum manufacturing becomes available to every mushroom grower. The mushroom grower would create a higher added value. In the places, where the mushroom growing is not developed and there is no substratum and no manufacturing rooms with complex technologies and equipment, it is possible to establish new and effectively working factories of the mushroom growing. Since it is not necessary to invest in the specialized equipment for the substratum manufacturing, it can be implemented in the same growing place.

This invention provides significant opportunities not only for growers of the champignons, but also for growers of the other cultivated mushrooms. For example, the previously mentioned aeration system 4 for localized aeration can be used for growing Enoki, Bruno Shimeji, Maitake, Erengyii, Shi-take and other mushrooms, during the growing of which substratum pasteurization is needed. The biggest influence this technology makes on the preparation of the substratum. In the currently known technologies the substrata are prepared not in the premises for the mushroom growing. The technologies of substrata sterilization or pasteurization are used to destroy the pathogens. During these processes, the substrata are placed into the special pasteurization premises or autoclaves, where substratum pasteurization or sterilization is implemented. After the mycelium incubation, the substratum is placed into the incubation or growing premises for the mushroom growing. To ensure these processes a special equipment of substrata packaging to the containers or packages is needed. Furthermore, these processes shall be implemented under very sterile conditions. This invention improves substratum pasteurization, because the heat necessary for the pasteurization together with equally supplied / extracted air pass through the substratum mass. The substratum warms up faster and more gradually, considerably less cold non-pasteurized zones occur.

The substratum can be pasteurized in the growing premises. After pasteurization, both the room and the substratum are clear, protected from diseases and pathogens: the only thing to do is to mix the mycelium in the pasteurized medium. For example, when producing Oyster mushrooms (Pleurotus Ostreatus), the previously mentioned tunnel technology is used, when the substratum pasteurization and / or conditioning is implemented in the aerated mass, after pasteurization the substratum is mixed with the mycelium and placed to the packages, which are transported to the premises for mycelium incubation, yield collection or other premises used / assigned for growing.

During mycelium incubation, a lot of heat is emitted, which is controlled externally, by the environment air. Since the intensity of the mycelium growing in the packages is not equal, the temperature in the packages differs and maintaining the optimal temperature needed for incubation process is not an easy task. When using this invention, it is possible to place the substratum immediately (before pasteurization) into the growing premises on the aerated shelves (or other suitable containers) and perform the pasteurization, conditioning and mycelium incubation processes, to make the fruits and grow the yield. Due to the thinner aerated layer (in the tunnels this thickness reaches 4 metres, on the shelves - up to 0.5 metres), the process is better controlled than in the tunnel technology: it is not necessary to place the substratum into packages, it is straight on the growing shelf or other suitable container. Since the substratum after pasteurization is not packaged or transported, the risk of infection reduces. For this reason, more stable yield is obtained. The process of the mycelium incubation is significantly more qualitative, whereas it is possible to control the oxygen concentration not only in the room, but also inside the substratum. Considerably more equal optimal temperature is maintained in the substratum. Since special machines and equipment for substratum packaging and pasteurization are not necessary, every mushroom grower will be able to make the substratum himself, in this way considerably decreasing the prime cost of the final product.

For the substratum preparation, by using the method of growing in the ventilated substratum packages, as shown in Fig. 3, the material 3 to be processed is formed and placed into packages. During or after packaging, when placing the aeration element 8, through which the air is supplied from the ventilation system (in this case, the general standard ventilation system of the premises can be used) to the package, the substratum is pasteurized by blowing the air of a corresponding pasteurization temperature. Therefore, an equal temperature is reached and maintained in all areas (zones) of the package. After the substratum pasteurization, the mycelium is undersown into the substratum, which, for example, can be injected by the injection method.

The package is ventilated during the mycelium incubation, therefore an equal temperature is ensured in its capacity (mycelium mass). When the mycelium naturalizes, new fruits are made and grown on the external layer of the package. In this particular case, even special shelves are not necessary, the substratum is prepared and the yield is collected simply on the ventilated package of the substratum. When using this technology, optimal mushroom growing conditions are reached, it is not necessary to invest in the expensive special tunnel and / or sterilization premises.

## Claims

1. Mushroom growing system (1) consisting of:
- a shelving construction (2) with a bottom (5) integrated into the shelving construction for the placement of material (3) to be processed,
- a control unit and
- an aeration system (4) for localized aeration of the material (3) to be processed with an external air supply / extraction system and a pipe system (7) connected with the shelving construction for ensuring the supply of a controlled gas flow to or from the shelving construction (2),
**characterized in that**
- the bottom (5) is a ventilated bottom which is part of the aeration system (4) and to which the gas flow is supplied or through which the gas flow is extracted and
- aeration elements (6) are connected to the ventilated bottom for locally directing the gas flow to or from the material to be processed.

2. Mushroom growing system according to claim 1, **characterized in that** the ventilated bottom (5) can be flat or concave or convex.

3. Mushroom growing system according to anyone of claims 1 to 2, **characterized in that** the shelving construction (2) can be a box, a container, a package system or an air permeable mesh.

4. Method for growing mushrooms in a mushroom growing system according to claim 1 with the following method steps:
- placing a material (3) to be processed on a ventilated bottom (5) integrated into a shelving construction (2),
- supplying a controlled gas flow to or from the ventilated bottom (2) via a pipe system (7) connected with the shelving construction (2) and
- locally aerating the material (3) to be processed with the gas flow which is directed to or extracted from the material to be processed via aeration elements which are connected to the ventilated bottom.

5. Method according to claim 4, **characterized in that,** the temperature in the material (3) to be processed is controlled by the localized aeration of the material (3) to be processed.

6. Method according to claim 4, **characterized in that,** the amount of gas flow to or form the material (3) to be processed is controlled by the localized aeration of the material (3) to be processed.

7. Method according to claim 4, **characterized in that,** it is used for growing champignons, oyster mushrooms, Enoki, Bruno Shimeji, Maitake, Erengyii, Shi-take and other cultivated mushrooms.

8. Method according to anyone of claims 4 to 7, **characterized in that,** compost is used as the material (3) to be processed and excess heat emitted due to the biochemical is collected from the compost and is used for drying substrata or for preparing biofuel or for heating the biofuel or for converting to electric power.

## Patentansprüche

1. Ein Pilzaufzuchtsystem (1) bestehend aus:
- einer Gestellkonstruktion (2) mit einem Boden (5), der in der Gestellkonstruktion für die Platzierung des Materials (3), das es zu verarbeiten gilt, integriert ist;
- einer Überwachungseinheit; und
- einem Lüftungssystem (4) für ortsbezogene Belüftung des Materials (3), das mit einem äußerlichen Luftversorgungs- und Abluftsystems bearbeitet werden soll und einem Schlauchsystem (7), das mit der Gestellkonstruktion verbunden ist, um die Versorgung eines gesteuerten Gasflusses zu und von der Gestellkonstruktion (2) zu sichern,
**dadurch gekennzeichnet, dass**
- der Boden (5) ein ventilierter Boden ist, welcher Teil des Belüftungssystems (5) ist und durch den der Gasfluss besorgt wird oder durch den der Gasfluss abgezogen wird; und
- Belüftungselemente (6) mit dem ventilierten Boden verbunden sind, um den Gasfluss örtlich zu oder vom dem zu bearbeitetem Material führen zu können.

2. Das Pilzaufzuchtsystem gemäß dem Anspruch 1, **dadurch gekennzeichnet, dass** der ventilierte Boden (5) flach oder konkav oder konvex sein kann.

3. Das Pilzaufzuchtsystem gemäß den Ansprüchen von 1 bis 2, **dadurch gekennzeichnet, dass** die Gestellkonstruktion (2) eine Kiste, ein Container, ein Paketsystem oder ein Luft durchlässiges Netz sein.

4. Eine Methode für die Pilzaufzucht in einem Pilzaufzuchtsystem in dem folgenden methodischen Schritten gemäß dem Anspruch 1:
- Platzierung eines zu bearbeitenden Materials (3) auf einem ventilierten Boden (5), der in die Gestellkonstruktion (2) integriert ist;
- Versorgung mit einem kontrollierten Gasfluss zu oder vom ventilierten Boden (2) mittels eines Schlauchsystems (7), das mit der Gestellkonstruktion (2) verbunden ist; und
- örtliche Belüftung des zu bearbeitenden Materials (3) mit dem Gasfluss, der sich auf das Material richtet oder von ihm abgezogen wird, um mittels der Belüftungselemente, die mit dem ventilierten Boden verbunden sind, bearbeitet zu werden.

5. Die Methode gemäß dem Anspruch 4, **dadurch gekennzeichnet, dass** die Temperatur im zu bearbeitenden Material (3) durch die örtliche Lüftung des zu bearbeitenden Materials (3) überwacht wird.

6. Die Methode gemäß dem Anspruch 4, **dadurch gekennzeichnet, dass** die Menge des Gasflusses zum oder vom zu bearbeitenden Material (3) durch die örtliche Lüftung des zu bearbeitenden Materials (3) überwacht wird.

7. Die Methode gemäß dem Anspruch 4, **dadurch gekennzeichnet, dass** sie Anwendung findet für die Aufzucht von Champignons, Austernpilzen, Enoki-Pilzen, Buna Shimeji, Maitake, Erengyii (Brauner Kräuter-Seitling), Shiitake-Pilz und anderen kultivierten Pilzarten.

8. Die Methode gemäß jedweder den Ansprüchen von 4 bis 7, **dadurch gekennzeichnet, dass** Kompost für das zu bearbeitende Material (3) benutzt und der Wärmeausstoß, welcher durch die Biochemie ausgestoßen wird, vom Kompost gesammelt und als Trockensubstrat oder für die Zubereitung von Biomasse oder für die Verheizung der Biomasse oder für die Wandlung in Elektrizität genutzt wird.

## Revendications

1. Un système de culture de champignons (1) comprenant :
- une construction à étages (2) avec un fond (5) intégré dans la construction à étages pour la mise en place de la matière (3) à traiter,
- une unité de commande et
- un système d'aération (4) pour une aération localisée de la matière (3) à traiter avec un système externe d'alimentation/ d'extraction d'air et un système de canalisation (7) relié à la construction à étages afin d'assurer l'approvisionnement d'un flux contrôlé de gaz vers ou à partir de la construction à étages (2),
**caractérisé par le fait que**
- le fond (5) est un fond ventilé qui fait partie du système d'aération (4) et auquel le flux de gaz est approvisionné ou par lequel le flux de gaz est extrait et
- les éléments d'aération (6) sont reliés au fond ventilé pour diriger localement le flux de gaz vers ou à partir de la matière à traiter.

2. Le système de culture de champignons selon la revendication 1, **caractérisé un ce que** le fond ventilé (5) peut être plat ou concave ou convexe.

3. Le système de culture de champignons selon l'une des revendications 1 à 2, **caractérisé un ce que** la construction à étages (2) peut être une boîte, un récipient, un système d'emballage ou un maillage perméable à l'air.

4. Une méthode pour la culture de champignons dans un système de culture de champignons selon la revendication 1 avec les étapes suivantes de la-dite méthode :
- en plaçant de la matière (3) à traiter sur un fond ventilé (5) intégré à la construction à étages (2),
- en approvisionnant un flux contrôlé de gaz vers ou à partir du fond ventilé (2) par l'intermédiaire d'un système de canalisation (7) relié à la construction à étages (2) et
- en aérant localement la matière (3) à traiter avec le flux de gaz qui est dirigé vers ou extrait de la matière à traiter au moyen d'éléments d'aération qui sont reliés au fond ventilé.

5. La méthode selon la revendication 4, **caractérisée un ce que** la température de la matière (3) à traiter est contrôlée par l'aération localisée de la matière (3) à traiter.

6. La méthode selon la revendication 4, **caractérisée un ce que** la quantité de flux de gaz vers ou à partir de la matière (3) à traiter est contrôlée par l'aération localisée de la matière (3) à traiter.

7. La méthode selon la revendication 4, **caractérisée un ce qu**'elle est employée pour la culture de champignons de Paris, de pleurotes en forme d'huître, d'enoki, de bruno shimeji, de maitake, d'eryngii, de shiitake et d'autres champignons cultivés.

8. La méthode selon l'une des revendications 4 à 7, **caractérisée un ce que** le compost est utilisé en tant que matière (3) à traiter et l'excès de chaleur émis par le biochimique est recueilli à partir du compost et est utilisé pour le séchage des substrats ou la préparation de biocarburant ou le chauffage du biocarburant ou la conversion en énergie électrique.
